# EUROPÄISCHE PATENTANMELDUNG

(11) **EP 1 375 942 A2**
(43) Veröffentlichungstag der Anmeldung: **02.01.2004**
(21) Anmeldenummer: 03014253.3
(22) Anmeldetag: 25.06.2003
(51) Int. Cl.: F16C 33/74

(54) **Axialwellendichtung**

(30) Priorität: 26.06.2002 DE 10228621
(71) Anmelder: Carl Freudenberg KG, 69469 Weinheim (DE)
(72) Erfinder: Klenk, Thomas, 69214 Eppelheim (DE); Bock, Eberhard, 69509 Mörlenbach (DE); Kramer, Thomas, 64668 Zotzenbach (DE); Pataille, Gilbert, 52200 Corlée (FR); Hufnagel, Werner, 72663 Grossbettlingen (DE); Heldmann, Martin, 64678 Lindenfels (DE); Clemens, Markus, 64385 Reichelsheim (DE)

(57) **Zusammenfassung**

Axialwellendichtung zwischen einer Gehäusewand oder dergleichen und einer sich darin drehenden Welle, wobei die Axialwellendichtung (20) aus einem in die Gehäusewand (21) ortsfest und dichtend einsetzbaren Außenring (3) mit einer radial nach innen gerichteten Manschette (22) aus einem polymeren Material in der Form eines Federbalgs, die an ihrem Innenrand (9) eine oder mehrere axial ausgerichtete Dichtflächen (13) hat, und aus einem verdrehfest und dichtend mit der Welle (6) verbindbaren Innenring (4) mit einem radial nach außen gerichteten als axiale Gegendichtfläche (25) ausgebildeten Ringflansch (10) besteht.

## Beschreibung

### Technisches Gebiet

Die Erfindung betrifft eine Axialwellendichtung zwischen einer Gehäusewand oder dergleichen und einer darin drehenden Welle. Solche Axialwellendichtungen sind in vielfacher Ausführungsform bekannt. Ihre unterschiedlichen Konstruktionen sind meist dadurch begründet, dass spezielle Abdichtungsprobleme vorliegen. Einer dieser Problemfälle liegt darin, eine Abdichtung auch dann zu erreichen, wenn die sich drehende Welle in axialer Richtung nicht unbeträchtliche Bewegungen ausführt.

### Stand der Technik

Durch das deutsche Gebrauchsmuster DE 1 893 773 ist eine Axialwellendichtung bekannt geworden, bei der bei einer Axialverschiebung der Welle in geringem Umfang der axiale Dichtungsring der Dichtung sich mitbewegt. Dadurch wird eine weiche und relativ langwegige Abdichtung erreicht. Diese axiale Dichtung bedingt jedoch einen auf der Welle aufgesetzten Wellenbund, an dem die Dichtungslippe anliegt oder einen Absatz am Wellenende, durch welchen eine Stirnfläche für die Dichtungslippe entsteht. Im Hinblick auf die konstruktive Gestaltung der Dichtung können jedoch größere Axialbewegungen der Welle nicht aufgefangen werden.

### Darstellung der Erfindung

Der Erfindung liegt die Aufgabe zugrunde, eine Axialwellendichtung so auszubilden, dass eine sichere Abdichtung auch bei besonders großem Axialspiel und auch radialen Ausschlägen der Welle erreicht wird. Die Dichtung soll außerdem möglichst einfach in ihrem Aufbau sein und eine leichte Montage erlauben.

Die Lösung der gestellten Aufgabe erfolgt bei einer Axialwellendichtung der eingangs genannten Art erfindungsgemäß dadurch, dass die Axialwellendichtung aus einem in die Gehäusewand ortsfest und dichtend einsetzbarem Außenring mit einer radial nach innen gerichteten Manschette aus einem polymeren Material in der Form eines Federbalgs, die an ihrem Innenrand eine oder mehrere axial ausgerichtete Dichtflächen hat, und aus einem verdrehfest und dichtend mit der Welle verbindbaren Innenring mit einem radial nach außen gerichteten, als axiale Gegenfläche ausgebildeten Ringflansch besteht. Diese Dichtung erlaubt die Aufnahme von sehr großem Radialspiel und großem Axialspiel der Welle. Sie erlaubt außerdem eine große Wellenschiefstellung. Sie hat eine geringere Verlustleistung und damit nahezu keine Ölverkokung, was zu einer langen Gebrauchsdauer führt. Sie ist einfach und kostengünstig herzustellen und erlaubt darüber hinaus eine einfache Montage beziehungsweise Demontage.

In bevorzugter Ausführungsform wird die Manschette innen mit einem im Wesentlichen radial ausgerichteten Umlaufring versehen. Dieser Umlaufring wird als Dichtfläche ausgebildet. In bekannter Weise kann die Dichtfläche mit Schmiermittel rückfördernden Nuten versehen sein. Auch ist es möglich, die Dichtfläche mit einer die Reibung mindernden Beschichtung, vorzugsweise aus PTFE zu versehen.

Es ist günstig, wenn die Manschette als ein Faltenbalg geformt ist. Dieser erlaubt eine einfache Fertigung und Handhabung der Manschette. Eingebaut ist es von Vorteil, wenn der Balg der Manschette zur Schmiermittelseite der Dichtung geöffnet ist. Dies führt zu einer besonders guten Schmierung der Dichtflächen und damit zu geringer Reibung und zu geringem Verschleiß

Um die Steifigkeit des Außenrings zu erhöhen, kann der Haftteil des Außenrings mit einer Versteifung aus zähhartem Werkstoff versehen sein. Ebenso ist es möglich, in den Umlaufring der Manschette eine Versteifung einzufügen.

Gemäß einer anderen Möglichkeit für die Rückförderung des Schmiermittels kann auch der Ringflansch mit Nuten versehen sein.

Der Innenring wird bevorzugt aus Metall hergestellt. Die Verwendung anderer Materialien ist bei Bedarf möglich. So ist auch der Einsatz von Kunststoffen in vielen Fällen vertretbar.

Für Montagezwecke oder auch um die Reibungskräfte zu reduzieren kann der Innenring mit einem polymeren Werkstoff zumindest teilweise ummantelt werden.

Von Vorteil ist, wenn der Innenring mit radial nach innen gerichteten Vorsprüngen oder noch besser einem Umlaufflansch ausgestattet ist, die beziehungsweise der an einem Absatz an der Welle als axialer Anschlag dienen beziehungsweise dient.

In weiterer Ausgestaltung der Erfindung kann der Ringflansch des Innenrings mit einer radialen Verlängerung versehen sein, die auf ihrem Außenbund als Geberrad oder Multipolrad ausgebildet ist, die mit einem in der Gehäusewand eingefügten Sensor zur Messung der Drehzahl und / oder der Wellenbewegung zusammen wirkt. Eine andere Möglichkeit diese Messungen durchzuführen besteht darin, dass der zylindrische Teil des Innenrings als Geberrad oder Multipolrad ausgebildet ist, der mit einem Sensor zusammenwirkt, der mit einem in der Gehäusewand angeordneten Stützflansch gehalten wird. Schließlich ist es auch möglich, dass der zylindrische Teil des Innenrings als Geberrad oder Multipolrad ausgebildet ist und der Außenring der Dichtung in einem Hilfsring befestigt ist, der eine schmutzabweisende Scheibe, vorzugsweise aus Vliesstoff, trägt.

### Kurzbeschreibung der Zeichnungen

Anhand mehrerer in der Zeichnung dargestellter Ausführungsbeispiele wird die Erfindung nachstehend näher erläutert.

Es zeigt:
- Fig. 1: den prinzipiellen Aufbau der Axialwellendichtung im Schnitt,
- Fig. 2 und 3: die Axialwellendichtungen mit einem Innenring, welcher ein Multipolrad trägt.

### Ausführung der Erfindung

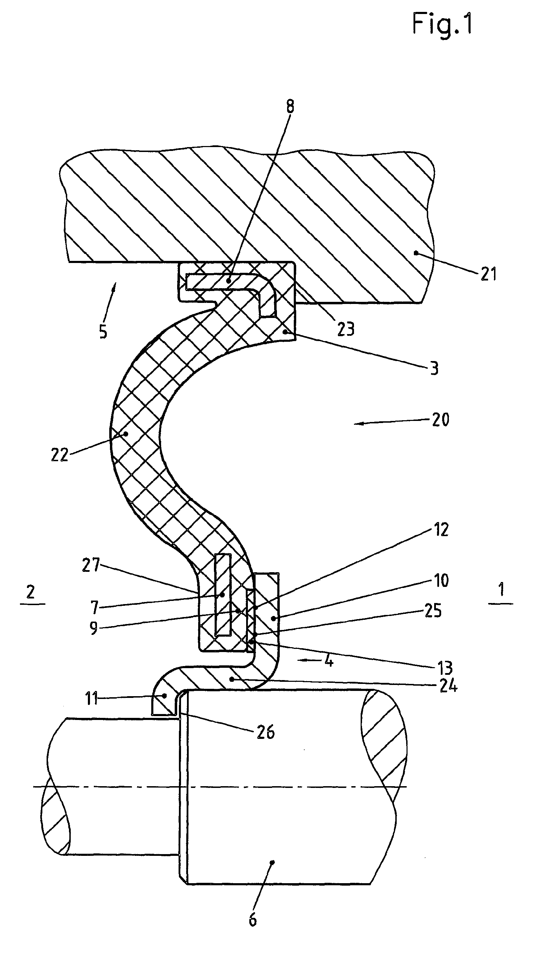

In der Fig. 1 ist eine Axialwellendichtung 20 im Schnitt gezeigt, die in die Gehäusewand 21 eingefügt ist und den Spalt zwischen der Gehäusewandung 21 und der Welle 6 abdichtet. Die Axialwellendichtung 20 besteht aus zwei Teilen, nämlich dem in die Gehäusewand 21 ortsfest und dichtend einsetzbaren Außenring 3 und dem Innenring 4. Der Außenring 3 hat eine radial nach innen gerichtete und aus einem polymeren Material hergestellte Manschette 22, welche die Form eines Federbalgs aufweist. Der Innenrand 9 der Manschette 22 ist als radialer Vorsprung ausgebildet und hat die Dichtfläche 13. Um die Steifigkeit des Außenrings 3 oder des Innenrands 9 zu erhöhen, können sie mit den Versteifungen aus einem zähharten Werkstoff 8 beziehungsweise 7 in Ringform versehen sein. Die Bohrung 5 des Gehäuses 21 ist mit einem einen Anschlag ergebenden Absatz 23 versehen, an dem der Außenring 3 zur Anlage kommt.

Der Innenring 4 ist auf die Welle 6 aufgesetzt. Er besteht aus einem zylindrischen Mittelteil 24 und hat einen radial nach außen gerichteten Ringflansch 10 mit der Gegendichtfläche 25 für die Dichtfläche 13 des Innenrands 9 der Manschette 22. Der Innenring 4 ist verdrehfest und dichtend auf die Welle 6 aufgesetzt. Er ist mit dem Umlaufflansch 11 versehen, der an dem Absatz 26 der Welle 6 anliegt und dadurch die Lage des Innenrings 4 festlegt.

Der Innenrand 9 der Manschette 20 ist als ein im Wesentlichen radial ausgerichteter Umlaufring ausgebildet. Im vorliegenden Beispiel ist der Umlaufring mit einer Dichtfläche 13 versehen. Diese Dichtfläche 13 kann mit Schmiermittel rückfördernden Nuten 12 versehen sein. Diese können direkt auf der Dichtfläche 13 aufgebracht werden. Möglich ist aber auch die Dichtfläche 13 mit einer die Reibung mindernden Beschichtung, vorzugsweise aus PTFE, zu versehen. Bevorzugt wird die Manschette 20 so angeordnet, dass sie zur Schmiermittelseite 1 der Dichtung geöffnet ist. Möglich ist aber auch eine umgekehrte Anordnung, das heißt, dass der Balg der Manschette 22 zur Umgebungsseite 2 gerichtet ist. Um diese Anordnung zu ermöglichen kann auf der Außenseite 27 des Innenrings 9 eine entsprechende Ausgestaltung vorgenommen werden und dieselbe als Dichtfläche in gleicher Weise, wie die gegenüberliegende Seite ausgebildet werden.

Die radiale Ausrichtung des Innenrands 9 kann konstruktiv von vornherein gegeben sein. Möglich ist aber auch die Manschette 22 mit dem Innenrand 9 so auszubilden, dass der Innenring vor seiner Montage gegenüber der Manschette 22 in Richtung auf den Ringflansch 10 des Innenrings 4 abgewinkelt ist und erst bei der Montage in seine radiale Richtung gedrückt wird.

In der gezeigten Ausführungsform ist der Innenring aus Metall hergestellt. Es ist aber auch möglich, den Innenring aus Kunststoff herzustellen beziehungsweise mit einem polymeren Werkstoff zumindest teilweise zu ummanteln, wie es in den nachfolgenden Figuren der Fall ist.

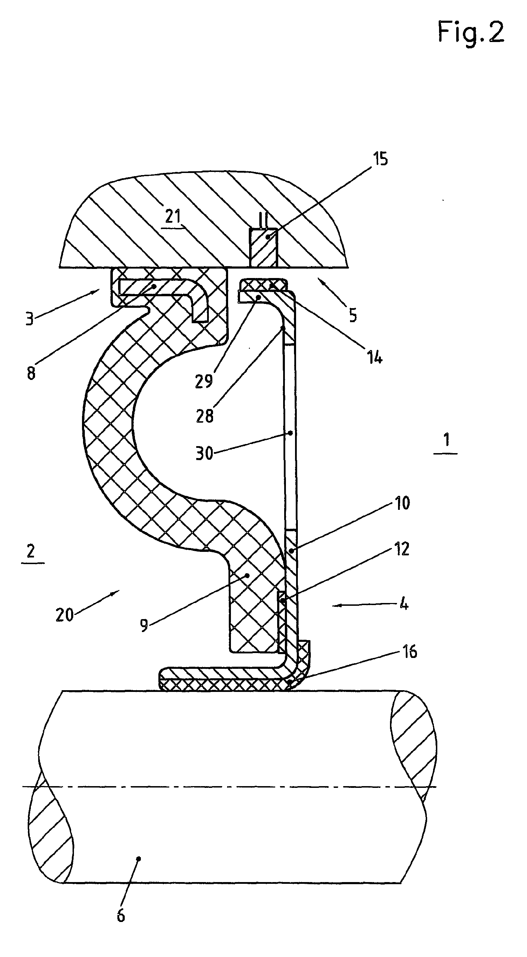

Die Fig. 2 zeigt eine Axialwellendichtung 20 mit einem mit dem der Fig. 1 vergleichbaren Aufbau, bei der der Innenring 4 auf seiner Innenfläche mit der Ummantelung 16 aus einem polymeren Werkstoff versehen ist. Durch diese Ummantelung 16 wird ein sehr guter dichtender Sitz des Innenrings 4 auf der Welle 6 erreicht. Der Ringflansch 10 des Innenrings 4 ist mit einer radialen Verlängerung 28 versehen, die auf ihrem Außenbund 29 das Multipolrad 14 trägt. Dieses Multipolrad 14 wirkt mit dem im Gehäuse 21 eingefügten Sensor 15 zusammen und es können die Drehzahl beziehungsweise die Wellenbewegung und auch andere Faktoren gemessen werden. Die Verlängerung 28 kann aus Gewichtsgründen und / oder um den Schmiermittelzutritt an die Dichtflächen zu erleichtern auf ihrem Umfang mit den Aussparungen 30 versehen sein.

Auch diese Konstruktion kann abgewandelt werden ohne den Erfindungsgedanken zu verlassen, wenn beispielsweise es nicht gewünscht ist, dass die Verlängerung 28 im Schmiermittelbereich der Dichtung vorhanden ist. In diesem Fall kann die Verlängerung auch auf der Außenseite 2 der Dichtung 20 angebracht sein.

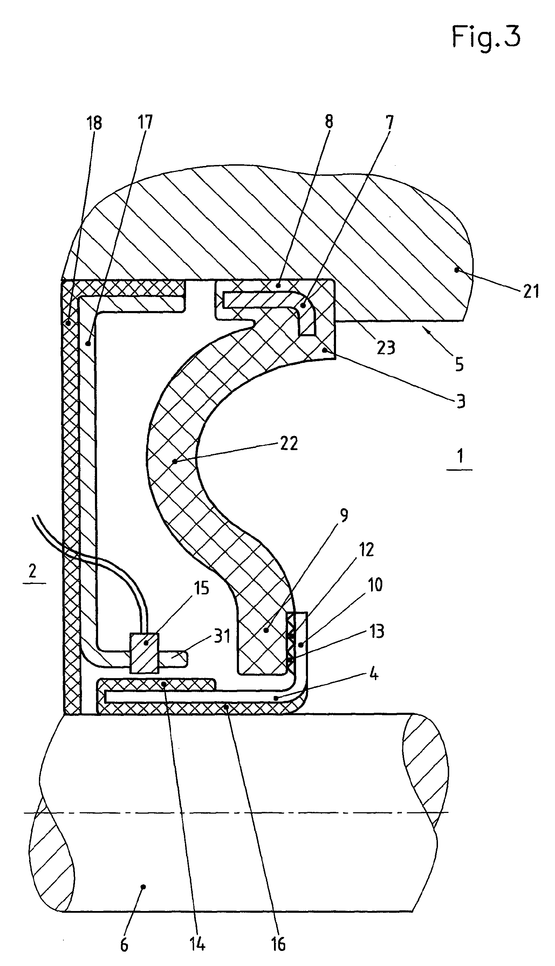

Ein gute Möglichkeit für die Anbringung des Multipolrads 14 und des Sensors 15 ist in der Fig. 3 gezeigt, in der der Außenring 3 mit der Manschette 22 und Innenring 4 mit Ringflansch 10 im Wesentlichen der Ausführungsform nach Fig. 1 entsprechen. Zusätzlich ist hier ein Hilfswinkel 17 angebracht, der auf seinem nach innen gerichteten Flansch 31 den Sensor 15 trägt, der gegenüber dem Multipolrad 14 liegt, wobei letzteres auf dem Innenring 4 angeordnet ist. Der Hilfsring 17 kann mit der Dichtschürze 18 versehen sein, die aus Vlies gebildet ist und die Welle 6 dichtend umfasst. Denkbar ist auch am Innenring 4 zur Außenseite hin einen schmutzabweisenden Flansch anzubringen.

## Patentansprüche

1. Axialwellendichtung zwischen einer Gehäusewand oder dergleichen und einer darin drehenden Welle, **dadurch gekennzeichnet, dass** die Axialwellendichtung (20) aus einem in die Gehäusewand (21) ortsfest und dichtend einsetzbaren Außenring (3) mit einer radial nach innen gerichteten Manschette (22) aus einem polymeren Material in der Form eines Federbalgs, die an ihrem Innenrand (9) eine oder mehrere axial ausgerichtete Dichtflächen (13) hat, und aus einem verdrehfest und dichtend mit der Welle (6) verbindbaren Innenring (4) mit einem radial nach außen gerichteten als. axiale Gegendichtfläche (25) ausgebildeten Ringflansch (10) besteht.

2. Axialwellendichtung nach Anspruch 1, **dadurch gekennzeichnet, dass** der Innenrand (9) der Manschette (22) als ein im Wesentlichen radial ausgerichteter Umlaufring ausgebildet ist.

3. Axialwellendichtung nach Anspruch 1, **dadurch gekennzeichnet, dass** der Innenrand (9) der Manschette (22) einen um bis zu maximal 30° von der radialen Normaleinrichtung abweichenden Vorwinkel besitzt.

4. Axialwellendichtung nach einem der Ansprüche 1 bis 3, **dadurch gekennzeichnet, dass** der Umlaufring eine oder mehrere Dichtflächen (13) hat.

5. Axialwellendichtung nach einem der Ansprüche 1 bis 4, **dadurch gekennzeichnet, dass** die Dichtfläche (13) mit Schmiermittel rückfördernden Nuten (12) versehen ist.

6. Axialwellendichtung nach einem der Ansprüche 1 bis 5, **dadurch gekennzeichnet, dass** die Dichtfläche (13) mit einer die Reibung mindernden Beschichtung, vorzugsweise aus PTFE, versehen ist.

7. Axialwellendichtung nach einem der Ansprüche 1 bis 6, **dadurch gekennzeichnet, dass** die Manschette (22) als ein Faltenbalg ausgeformt ist.

8. Axialwellendichtung nach einem der Ansprüche 1 bis 7, **dadurch gekennzeichnet, dass** der Balg der Manschette (22) zur Schmiermittelseite (1) der Dichtung (20) geöffnet ist.

9. Axialwellendichtung nach einem der Ansprüche 1 bis 8, **dadurch gekennzeichnet, dass** der Außenring (3) mit einer Versteifung (8) aus zähhartem Werkstoff versehen ist.

10. Axialwellendichtung nach einem der Ansprüche 1 bis 9, **dadurch gekennzeichnet, dass** der Umlaufring (9) ein Versteifungsblech (7) hat.

11. Axialwellendichtung nach einem der Ansprüche 1 bis 10, **dadurch gekennzeichnet, dass** der Ringflansch (10) des Innenrings (4) mit Schmiermittel rückfördernden Nuten (12) versehen ist.

12. Axialwellendichtung nach einem der Ansprüche 1 bis 11, **dadurch gekennzeichnet, dass** der Innenring (4) aus Metall besteht.

13. Axialwellendichtung nach einem der Ansprüche 1 bis 12, **dadurch gekennzeichnet, dass** der Innenring (4) mit einem polymeren Werkstoff zumindest teilweise ummantelt ist.

14. Axialwellendichtung nach einem der Ansprüche 1 bis 13, **dadurch gekennzeichnet, dass** der Innenring (4) mit radial nach innen gerichteten Vorsprüngen oder einem Umlaufflansch (11) ausgestattet ist, die beziehungsweise der an einem Absatz (26) an der Welle (6) als axiale Anschläge anliegen.

15. Axialwellendichtung nach einem der Ansprüche 1 bis 14, **dadurch gekennzeichnet, dass** der Ringflansch (10) des Innenrings (4) mit einer radialen Verlängerung (28) versehen ist, die auf ihrem Außenbund (29) ein Geberrad oder Multipolrad (14) trägt und die mit einem in der Gehäusewand (21) eingefügten Sensor (15) zur Messung der Drehzahl und / oder der Wellenbewegung zusammenwirkt.

16. Axialwellendichtung nach einem der Ansprüche 1 bis 15, **dadurch gekennzeichnet, dass** der zylindrische Teil (24) des Innenrings (4) mit einem Geberrad oder Multipolrad (14) versehen ist, das mit einem Sensor (15) zusammenwirkt, der von einem in der Gehäusewand (21) angeordneten Hilfsflansch (17) gehalten wird.

17. Axialwellendichtung nach einem der Ansprüche 1 bis 14, **dadurch gekennzeichnet, dass** der zylindrische Teil (24) des Innenrings (4) als Geberrad oder Multipolrad (14) ausgebildet ist und dass der Außenring (3) in einem Hilfsring (17) befestigt ist, der eine schmutzabweisende Scheibe (18), vorzugsweise aus Vliesstoff, trägt.
